# EUROPEAN PATENT APPLICATION

(11) **EP 3 354 551 A1**
(43) Date of publication of application: **01.08.2018**
(21) Application number: 18153841.4
(22) Date of filing: 29.01.2018
(51) Int. Cl.: B62M 6/40, B62M 6/75, B60L 11/00

(54) **BICYCLE COMPRISING ENGINE BRAKE**

(30) Priority: 31.01.2017 IT 201700010575
(71) Applicant: Jin, Ou, 50053 Empoli (FI) (IT); Chin, Bei Rong, 16146 Genova (GE) (IT)
(72) Inventor: Jin, Ou, 50053 Empoli (FI) (IT); Chin, Bei Rong, 16146 Genova (GE) (IT)
(74) Representative: Ferroni, Filippo

(57) **Abstract**

The invention relates to a bicycle equipped with a drive-brake device providing pedal assistance and braking assistance actions, depending on the riding conditions of the bicycle.

The system is obtained by means of brushless direct-current electric motors (110-113) peripherally active upon the wheels (7, 8), which can also work as generators and are controlled by a control unit (101) installed on the bicycle or possibly by a mobile phone.

## Description

La present invention relates, in a general aspect thereof, to servoassisted bicycles, i.e. bicycles equipped with motor means allowing the user to reduce the effort required for pedalling.

As is known, bicycles have now become increasingly evolved from a technological viewpoint, and this is true for those designed for sports or competition use as well as those intended for people's free time or mobility.

The use of electronic devices on bicycles has now become widespread, which devices are, in some cases, small onboard computers providing the cyclist with information about his/her performance, the route, the speed, the gradient, etc.

The use of such electronic devices has also promoted the application of servo-assistance systems to bicycles and/or to components thereof, e.g. gear shift system, suspensions, brakes, pedals, saddle, etc.

One example of this state of the art relating to bicycle components is known from American patents US 9,381,974 and US 9,399,500, which describe a wireless control system for bicycle components, more specifically the dérailleur, which displaces the chain to mesh it with the cassette on the rear wheel.

As far as bicycle pedal assistance is concerned, i.e. combined pedal-motor drive or motor-only drive for reducing the effort made by a cyclist when climbing a gradient or simply when he/she is tired, several solutions exist.

In this case as well, reference can be made to the abundant technical and patent literature on this matter, e.g. American patent applications US 2016/0121730 and US 2015/0352973, both by Shimano Inc.; usually these bicycle servo-assistance systems include an electric motor housed in the bicycle frame near the crankset, which drives the pedal shaft or pin, preferably via a reducing gear.

The electric motor is associated with a clutch or another similar unidirectional connecting or coupling member, which prevents the motor from being dragged in rotation when the person is pedalling, while however allowing the torque to be transmitted from the motor to the shaft when drive torque is required.

Power is supplied to the electric motor by electric batteries, which are preferably arranged in a suitable compartment to protect them against external environmental agents; they are operationally connected to a controller, which manages the operation of the batteries in order to optimize their consumption according to the cruising speed of the bicycle.

For this purpose, many solutions are available which depend on the type of batteries (e.g. lithium, nickel, etc.) and on the dimensions and number thereof, as well as on the bicycle and any other devices (lights, gear shift system, onboard computer) powered by the batteries.

For example, the solution described in publication US 2015/0352973 uses a set of electric batteries, each one associated with a respective controller, which in turn is connected to a general power controller that manages the batteries according to their charge level and the energy to be supplied to the electric motor.

The latter assists the cyclist's pedalling action according to the running conditions of the bicycle (ascent, flat or descent), i.e. as a function of the torque that needs to be applied to the shaft (i.e. the crankarm pin). To this end, the bicycle is equipped with a pedalling force sensor, which detects the effort made by the cyclist; when a predefined threshold is reached, the power controller will activate the electric motor to assist the pedalling action. The batteries, and more generally the pedal assistance system, are turned on or off by the user by means of a switch, which may be arranged on the battery itself or on the handlebar. In addition to the pedal assistance motor, the bicycle of publication US 2015/0352973 also includes an electric gear shift actuator connected to the battery. The actuator may control a dérailleur, for typical bicycle gear shift systems, or a variator, for solutions similar to those employed on mopeds.

It can be understood from the above description that there are a number of drawbacks that limit the operability and efficiency of pedal-assisted bicycles, or anyway bicycles equipped with motor means, according to the prior art as known to the present applicant. For example, the first one relates to the fact that the motor means, which comprise at least the electric motor and the associated reducer or transmission, are generally arranged in the bicycle frame in proximity to the crankset, so that they can be kinematically connected to the crankshaft and/or to the chainring with which the chain of the bicycle is associated. This implies limitations of the motor dimensions, and therefore of the drive torque it can provide, because in the frame area near the crankset there is limited room, and a bigger motor and transmission would likely hinder the movements of the cyclist and/or of the crankarms.

In other words, it can be said that the motor means for bicycles currently known in the art suffer from intrinsic physical limitations that limit the applicability thereof.

Similar conclusions also apply to the case wherein the motor is coupled to the hub of the rear wheel, in accordance with another arrangement known in the art.

Moreover, the hub of the rear wheel usually serves as a support for the cassette pinions; therefore, housing a motor in the rear hub requires an adaptation of the latter that makes it hardly compatible with a manual gear shift system.

Finally, as a corollary of this review of the general state of the art, it can be inferred that the electric motor of bicycles cannot be used as a generator for recharging the batteries; in fact, as explained above with reference to publication US 2015/0352973, the reducer and/or the transmission that connect it to the shaft or to the rear hub are unidirectional mechanisms, which prevent the motor from being dragged in rotation when the user is pedalling.

It follows therefore that the motor means and the batteries can generally be utilized only for a limited time compared to the total time of use of a bicycle, *de facto* becoming, for long time intervals, additional weight ballasting the bicycle when the motor is not in use. In light of this analysis of the state of the art, it can be stated that a technical problem at the basis of the invention is to provide a pedal-assisted, servo-assisted bicycle or the like, comprising motor means, preferably electric but not necessarily electric or only electric, having such structural and operational characteristics as to overcome the above-described drawback of prior-art bicycles.

In other words, it can be said that one of the objects of the invention is to provide a bicycle wherein the motor means, or at least a part thereof, can also be used when no assistance is required to the effort of a pedalling person, so that they can be exploited at best throughout the time of operation of the bicycle.

A further object of the invention is to provide a bicycle equipped with motor means adapted to operate also as electric generator means, so as to recharge the batteries when the bicycle is in use, e.g. while riding downhill.

The idea that solves the above-mentioned technical problem and/or attains one or more of the above-listed objects is to provide a bicycle wherein the pedal assistance means can also work as braking assistance means: in this manner, they will be active not only when assisting the effort of the pedalling person, but also during the normal, i.e. unassisted, operation of the bicycle in order to cause it to slow down.

Advantageously, this feature can also be exploited for converting the kinetic energy of the bicycle into electric energy useful for recharging the batteries.

In fact, by using appropriate motor means capable of operating also as electric generator means, the mechanical work done while braking can be transformed into electric energy (according to the well-known dynamo principle) to be then supplied to the batteries. The features of the invention are more specifically set out in the claims appended to this description.

Such features and the effects and advantages attained by the invention will become more apparent from the following description referring to a non-limiting exemplary embodiment as illustrated in the annexed drawings, wherein:

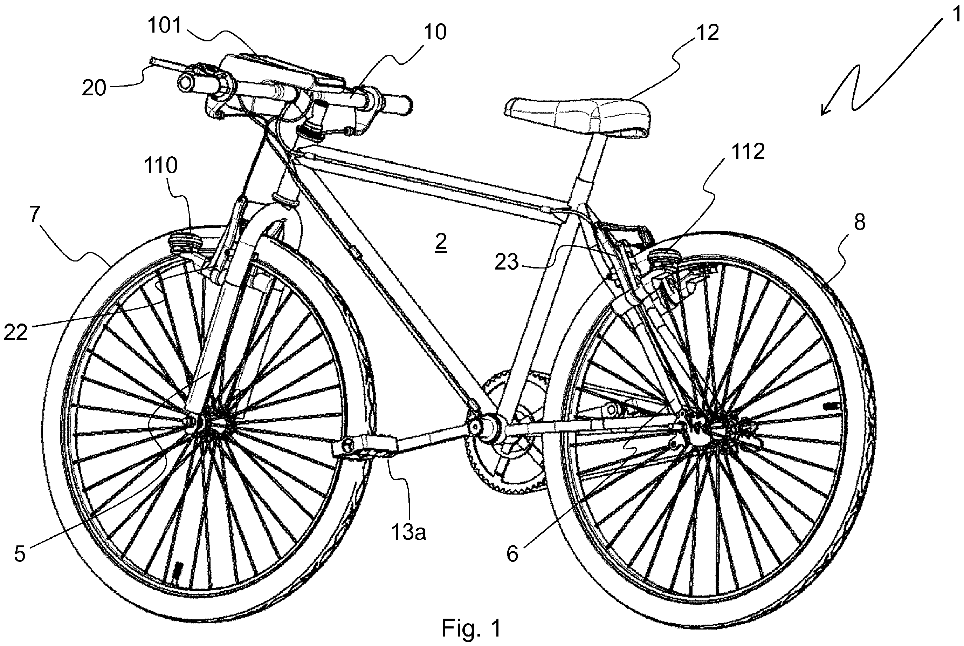

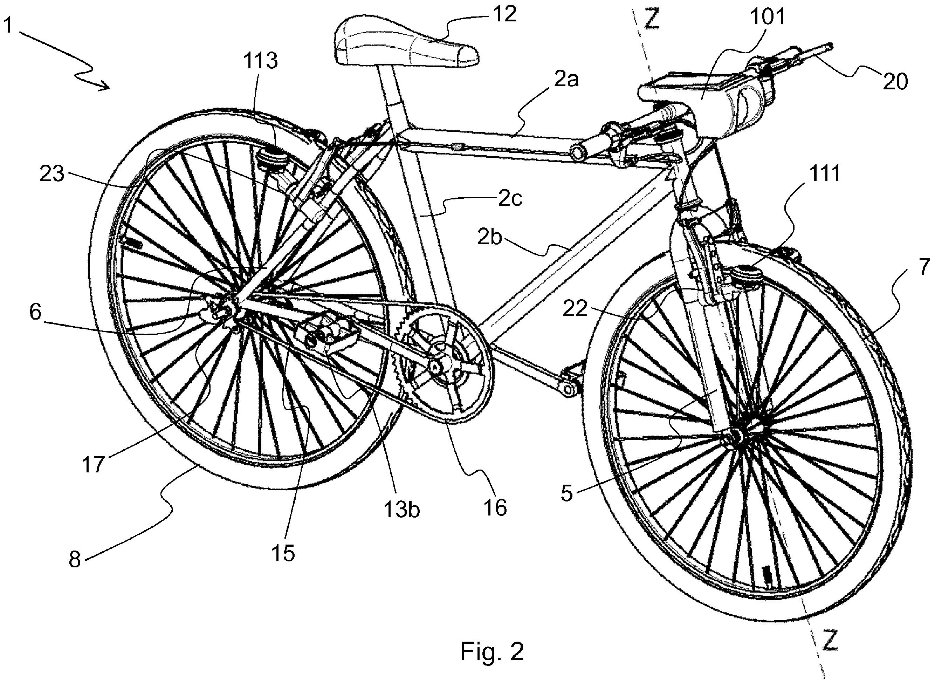

- Figs. 1 and 2 are perspective views, from respective angles, of a bicycle according to the invention;

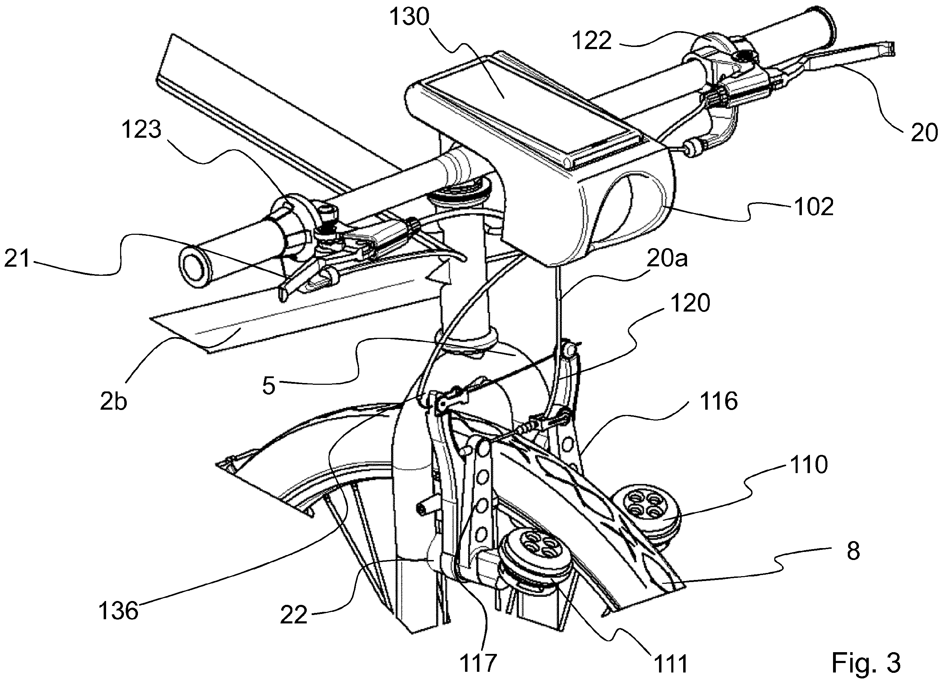

- Fig. 3 shows a detail of the front part of the preceding bicycle;

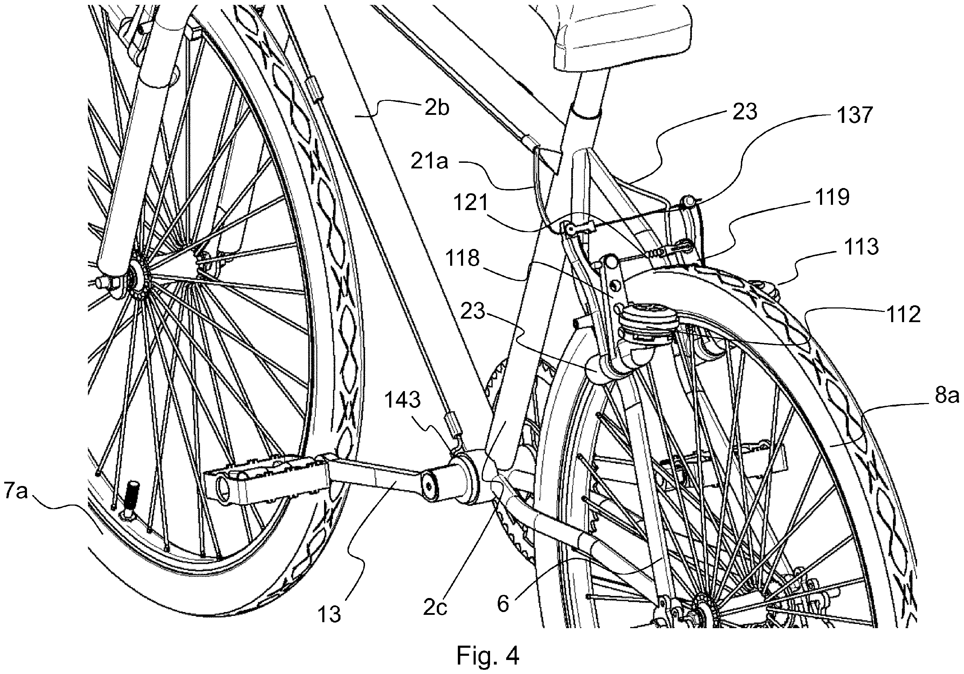

- Fig. 4 shows a detail of the rear part of the preceding bicycle;

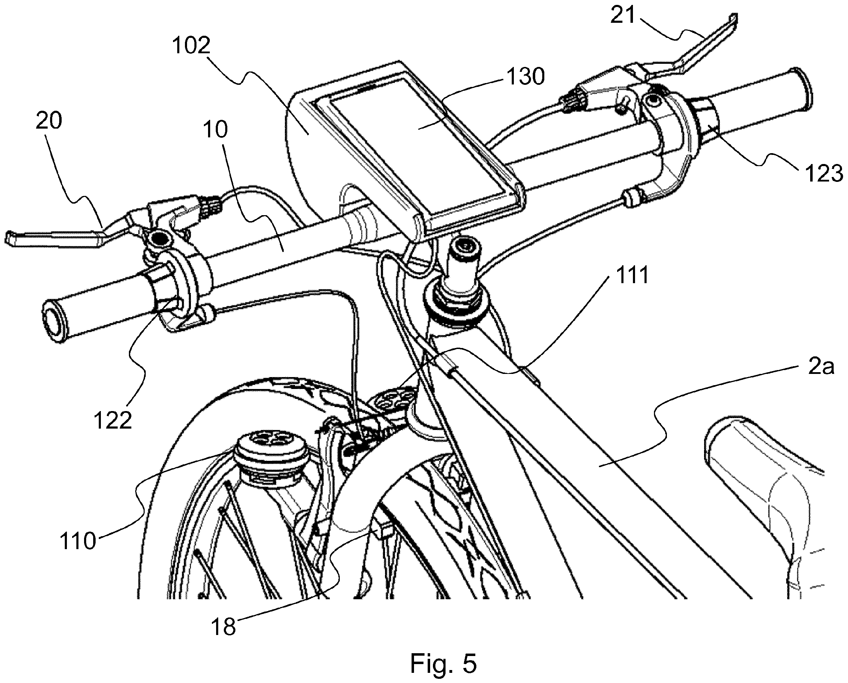

- Fig. 5 is a top view of the handlebar of the preceding bicycle;

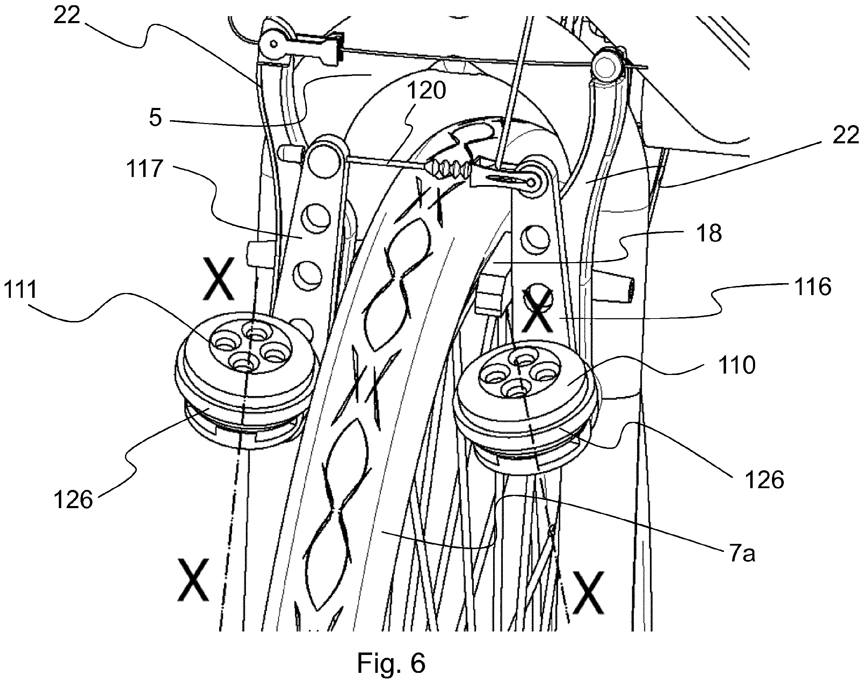

- Fig. 6 shows a detail of the preceding bicycle and of a front motor-brake device according to the invention;
- Fig. 7 is a magnification of the motor-brake device of the preceding figure;
- Fig. 8 is a block diagram relating to a control unit of the motor-brake device of the preceding figures;
- Fig. 9 is a block diagram relating to a variant of the control unit of the preceding figure;
- Fig. 10 shows a further variant of application of a motor-brake device to a bicycle;
- Fig. 11 is a plan view of a detail of the preceding figure;
- Fig. 12 shows a variant of the block diagram relating to a control unit of the motor-brake device of Fig. 8.

Before proceeding any further with the examination of the example shown in the drawings, it is worth stating that the term "comprises" and derivatives thereof, such as "comprising", "comprehensive" and the like, as used in this description, should be understood in a broad sense to specify the presence of the mentioned elements, features, components, assemblies and operating steps, without however excluding other elements, features, components, etc. non expressly mentioned or described in detail herein.

The same also applies to verbs like "include", "have" and derivatives thereof, as well as nouns or terms like "part", "section", "portion", "member", "element", which may be used in singular or plural form to indicate an individual part or a set of parts, unless otherwise ensuing from the context.

Furthermore, any particular configuration and/or structure and/or feature described hereinafter as non-limiting examples may be considered individually or combined together or with other elements as deemed appropriate in one or more embodiments of the invention, even different from those exemplified herein. Also, the specified numerical references are therefore used only for simplicity's sake and do not define or limit the protection scope or extent of the various embodiments. Likewise, any spatial references and/or definitions such as "upper", "lower", "on", "under", "high", "low" should be understood to refer to the exemplary drawings and should not therefore be understood as limitations or to exclude different positions of the individual elements.

Finally, it should be taken into account that, for brevity or clarity, this description will only tackle those parts or elements that are necessary or useful for understanding the invention, neglecting those that are unimportant in this respect. Therefore, since this case refers to a bicycle, reference may be made for further information on this matter to the common technical knowledge of skilled (or even not particularly skilled) persons as concerns this means of transport.

With this in mind, a bicycle according to the invention is indicated as a whole in the drawings by reference numeral 1; it comprises a frame 2, which in this case is of the closed type, consisting of tubes 2a, 2b, 2c joined together, e.g. by welding, if they are metal tubes (steel, aluminium, titanium or alloys thereof), or by using other appropriate methods (moulding, thermoforming, glueing, etc.), if they are made of different materials, including synthetic materials such as carbon fibre, PVC, etc.

The bicycle 1 further comprises a front fork 5 and a rear fork 6 for mounting respective spoke-type wheels 7 and 8; the rear fork 6 is a structure integral with the frame 2, being essentially an appendix thereof formed by stays, while the front fork 5 is associated with the frame 2 and connected to the handlebar 10 of the bicycle in a *per se* known manner (i.e. by means of a steering tube, rolling bearings, etc.), so that it can rotate about an axis Z, which is preferably inclined relative to the vertical, for steering the bicycle.

The latter further comprises a saddle 12 and a crankset 13 with two pedals 13a, 13b that cause the rear wheel 8 to turn via the chain transmission 15, which connects a front chainring 16 to a rear pinion 17; the bicycle 1 is also equipped, on the wheels 7 and 8, with respective pairs of pad-type brakes 18 and 19, controlled by respective levers 20, 21 mounted on the handlebar 10, to which they are respectively connected by means of common flexible cables 20a, 21a.

The brakes 18, 19 are supported on the front and rear forks 5 and 6 by respective oscillating arms or brackets 22, 23; in this example, the brakes 18, 19 are of the "V" type, i.e. they are supported by the oscillating arms 22, 23 (under the action of return springs not shown in the drawings) arranged on opposite sides of the wheels 7, 8 and mounted on the front fork 5 and rear fork 6.

Note that all these bicycle components (frame, crankset, chain, wheels, brakes, etc.) can advantageously be of known types or like those present on common bicycles, especially in view of the application of the invention to existing bicycles.

As a matter of fact, this is a particularly advantageous aspect of the invention, since it is also applicable to existing bicycles, transforming them into bicycles equipped with drive means without requiring any changes or modifications, thus broadening the range of application of the invention.

This is true for all bicycles, not only for those similar to the one shown in the drawings, which is merely an example; therefore, the invention can be applied to road or off-road bicycles, for adults or children, with rigid or folding frames, with or without gear change, etc.

In accordance with a preferred embodiment of the invention, the bicycle 1 comprises a drive-brake device 100 associated with or active upon the wheels 7, 8; this is however merely a preferential solution, since the drive-brake device could be associated with or active upon one wheel only, e.g. the front wheel 7 or the rear wheel 8.

For this reason, as well as for ease of description, in this example of embodiment of the invention it will be assumed that the drive-brake devices 100 of each wheel 7, 8 are equal. They may however be different, depending on specific requirements, on the bicycle type, etc.

The drive-brake device 100 comprises a control unit 101, which in the example is applied to the handlebar 10 for reasons that will be further described below. However, it may also be arranged elsewhere on the bicycle, e.g. on the frame 2 or in a basket, if present.

The control unit 101 essentially comprises an enclosure or external container 102 having a substantially box-like configuration, which houses the batteries 104; the latter are preferably of the type having a high performance-to-weight ratio, such as, for example, lithium or lithium-polymer batteries.

The other components of the control unit 101 will be described later on, in that they will become clearer after the description of the other parts of the drive-brake device 100, which comprises a plurality of rotors 110, 111, 112, 113 arranged in pairs near the front wheel 7 and the rear wheel 8.

The rotors 110-113 are rotors of corresponding brushless electric motors 110a, 111a, 112a, 113a of the outrunner type, i.e. wherein the rotary element whereon the magnets are arranged is the outer part of the motor, i.e. the rotor.

Before proceeding any further, it is worth pointing out that, for clarity, in this description and in the appended claims reference will mostly be made to the rotors 110-113 when defining the elements of the drive-brake device 100 because, as will become apparent below, depending on the running conditions of the bicycle, the brushless motors 110a-113a can also work as current generators, and this might lead to misunderstandings or anyway limit the scope of the invention.

On the other hand, the mechanic and electric characteristics of the brushless motors (and generators) that include the rotors 110-113 may vary according to a number of parameters, such as the application, i.e. the bicycle type (big, small, road, off-road, etc.), the power required for pedal assistance, and more.

The rotors 110-113 typically have an outside diameter of 15 to 50 millimetres and a height of 10 to 40 millimetres; also, the respective brushless electric motors (or generators) 110a-113a may have different power ratings depending on the application, usually of the order of a few hundred Watt, ranging from 100 to 5-600 Watt.

Brushless electric motors (generators) having these characteristics are now commercially available, e.g. from Chinese company Hobbyking (Internet site: www.hobbyking.com) or from Italian company Modeltoy Srl (www.modeltoy.it).

These electric motors are normally employed for other applications, such as small to medium size servoassistance systems for driving mechanical parts, or for hobby-modelling applications and/or for driving remotely controlled aircraft (also known as drones).

It is therefore not necessary to dwell any further upon the technology and the structural (windings, permanent magnets, etc.), electrotechnical (DC power) and operating features of these brushless motors (generators), in regard to which reference can be made to the extensive technical and scientific literature available on this matter.

In light of this preamble, it is possible to understand that the rotors 110-113 (with the respective motors/generators 110a-113a) are in this example advantageously arranged on the same brackets 22, 23 used for supporting the brakes 18, 19, as in the example shown in the drawings; to this end, the side of the brackets 22, 23 opposite to the one of the brakes 18, 19 can be used, where holes are usually present (not shown in the drawings) for securing other elements.

Independently of this, the rotors 110-113 are mounted on respective elastically oscillating levers 116, 117, 118, 119, similar to those of the brakes, controlled in pairs (i.e. those on the front wheel 7 and those on the rear wheel 8) by respective cables 120, 121 connected to control knobs or grips 122, 123 on the handlebar 110.

In particular, the knobs or grips 122, 123 control the movement of the levers 116-119, so as to move the corresponding rotors 110-113 from an idle condition, in which they are at a distance from the wheels 7, 8 of the bicycle, to a working condition, in which the rotors 110-113 are in abutment with, and preferably pressed against, the wheels 7, 8. Preferably, the orientation of the axis of rotation X-X of the rotors 110-113 is substantially transversal to the axis of rotation of the corresponding wheel 7, 8, so that the peripheral speed of the rotors at the point of contact with the wheel is substantially parallel to the peripheral one of the latter.

In other words, it can be said that the actuation of the rotors 110-113 supported by the levers 116-119 and controlled via the cables 120, 121 and the knobs 122, 123 on the handlebar 10, is after all similar to that of the brakes 18, 19 controlled by the levers 20, 21 on the handlebar, the only difference being that in the case of the rotors 110-113, the working condition in which they are pressed against the wheels 7, 8 is held stably until it is changed by acting upon the control knobs 122, 123.

This allows the person using the bicycle to continue riding normally, even when the pedalling action is assisted by the drive-brake device 100.

The rotors 110-113 are preferably equipped on the outside with a protruding rubber layer 126 that promotes the friction with the respective wheel 7, 8 when they are pressed against it in the working condition.

Thus, the rubber layer 126 promotes the rolling of the rotor 110-113 on the wheel 7, 8, like a car tyre on the road, and preferably it can be replaced when worn out for optimal operation and wheel-rotor contact.

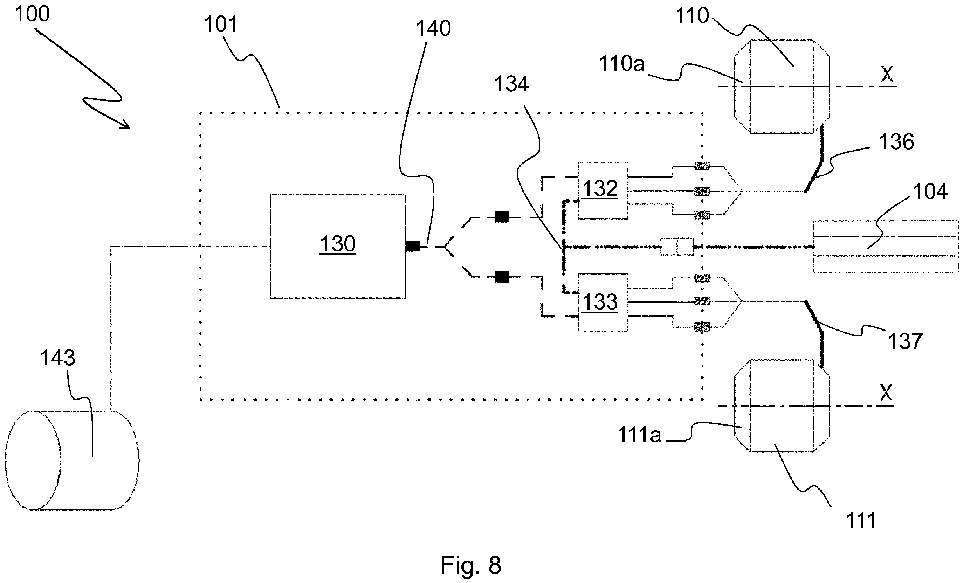

In this respect, reconnecting to the above preamble, it seems appropriate to provide some explanations, with the help of the block diagram of Fig. 8, as concerns the control unit 101 and how the rotors 110-113 are controlled.

As can be seen, the control unit 101 comprises a control assembly 130 (also known as ride controller) connected to a set of electronic speed regulators 132, 133; the latter are powered by the batteries 104 and are in turn connected to the brushless electric motors 110a-113a associated with the rotors 110-113.

Figure 8 shows only the two rotors 110, 111 and motors 110a, 111a of the front wheel 7 of the bicycle with the regulators 132, 133, but of course the same also applies to the rear ones 112, 113, which are identical and are coupled to respective controllers (not shown in Fig. 8).

When the drive-brake device 1 is in the working condition of pedal assistance, the electronic regulators 132, 133 control the speed of the rotors 110, 111 by supplying the necessary electric current to the respective motors 110a, 111a according to modes established by the control assembly 130.

In practice, the electronic regulators 132, 133 receive from the control assembly 130 electric signals that are preferably of the modulated digital type (e.g. Position Pulse Modulation or PPM) in the form of a square wave, with a high frequency that is a function of the revolution speed of the rotors: the higher the speed, the higher the frequency, which may reach values of a few thousands of cycles per second (kHz).

In the block diagram, each regulator 132, 133 has at its input the power wires 134 that connect it to the batteries 104, and at its output the wires (typically three, corresponding to the number of phases of the stator windings) 136, 137 that supply the current to the brushless motors 110a-113a associated with the rotors 110, 113.

The line 140 that connects the control assembly 130 to the regulators 132, 133 is bidirectional, i.e. capable of transmitting signals from the former to the latter and vice versa, depending on the riding conditions of the bicycle, which will be tackled below. The control assembly may be powered autonomously by one of the batteries 104 and a wire or, preferably, it may be equipped with an internal circuit allowing it to be powered through one of the regulators 132, 133 and the data connection line 140.

Such a circuit (which may be integrated into the printed circuit board of the control assembly 130) will make it possible to supply power to the onboard electronics without having to use a secondary battery specially dedicated to the control assembly 130.

The latter is also connected to other sensors and apparatuses aboard the bicycle, in this case an encoder 143 applied to the crankset 13 to detect the pedalling cadence; other sensors that may be connected to the control assembly 130 include torque and/or bicycle speed sensors 1, an accelerometer for determining speed variations over time, an inclinometer for knowing the slope of the road, or an ultracapacitor or supercapacitor. Such sensors and/or components are not shown in the drawings, but may be already present on the bicycle or directly incorporated into the control unit 101.

The above-described bicycle 1 and drive-brake device 100 operate as follows.

When during a trip, a journey or an excursion a person needs pedal assistance, e.g. because the road is uphill or he/she is tired, he/she commands the activation of the motor function on the device 100 by means of the control unit 101; at the same time, the user operates the knobs 122, 123 on the handlebar to bring the rotors 110, 111 e 112, 113 into the working condition, in which they are pressed against the wheels 7 and 8.

It should be noted that, however, since the front rotors 110, 111 and the rear rotors 112, 113 are advantageously independent, it is also possible to activate just one pair of rotors. In this working condition, the control unit 101 receives, from the sensor 143 in the crankset or from other sensors possibly present on the bicycle, information about the pedalling cadence, the bicycle speed, acceleration or deceleration, the slope of the road, and the like.

Based on such information, the control assembly 130 calculates the necessary electric power to be supplied to the brushless electric motors 110a-113a associated with the rotors 110-113, so that the latter will assist the pedalling action of the person who is riding the bicycle.

More specifically, the rotors 110-113 turn at a predefined revolution speed (rpm), so as to have a peripheral speed (i.e. the linear speed given by the product between speed ω and radius r) slightly higher than the peripheral speed of the wheels 7, 8: in this manner, the rotors 110-113 will apply a drag torque to the wheels 7, 8, promoted by the friction between them and the rubber layer 126 on the rotors 110-113.

Note that in the example the rotors 110-113 are active upon the rim 7a, 8a of the wheels 7, 8; this is the most reliable solution, since it is not dependent on the level of inflation of the inner tubes or on the condition of the tyre. Nevertheless, solutions wherein the rotors 110-113 are active upon the wheel tyres should not be excluded, in that good friction will be ensured with the rotors and the coating layer 126, since they are made of rubber.

The electric current supplied to the brushless motors associated with the rotors 110-113 is regulated by the regulators 132, 133 on the basis of the digital signals received from the control assembly 130: this results in optimal management of the current of the batteries 104, capable of immediately adapting itself to changes in the riding conditions of the bicycle.

When the user no longer needs pedal assistance, he/she commands the release of the rotors 110-113 by operating the knobs 122, 123 on the handlebar.

This change of operating condition will cause a sudden increase of the revolution speed of the rotors 110-113 that will be readily detected by the regulators 132, 133, which will then command a current cut-off to safeguard the electric charge of the batteries 104. When the bicycle is riding downhill or the user does not want any pedal assistance, he/she can set the device 100, on the control unit 101, to work as a brake.

In such a condition, the device 100 becomes an auxiliary brake supplementing the normal brakes 18, 19, which slows down the bicycle by exploiting the rotors 110-113 and their brushless motors 110a-113a as electric current generators.

It is in fact known that the principle of operation of such motors allows them to operate, in a reversible manner, also as a current generating machine by exploiting the motion of the rotors 110-113, whereon the permanent magnets are arranged, in order to induce currents in the stator windings.

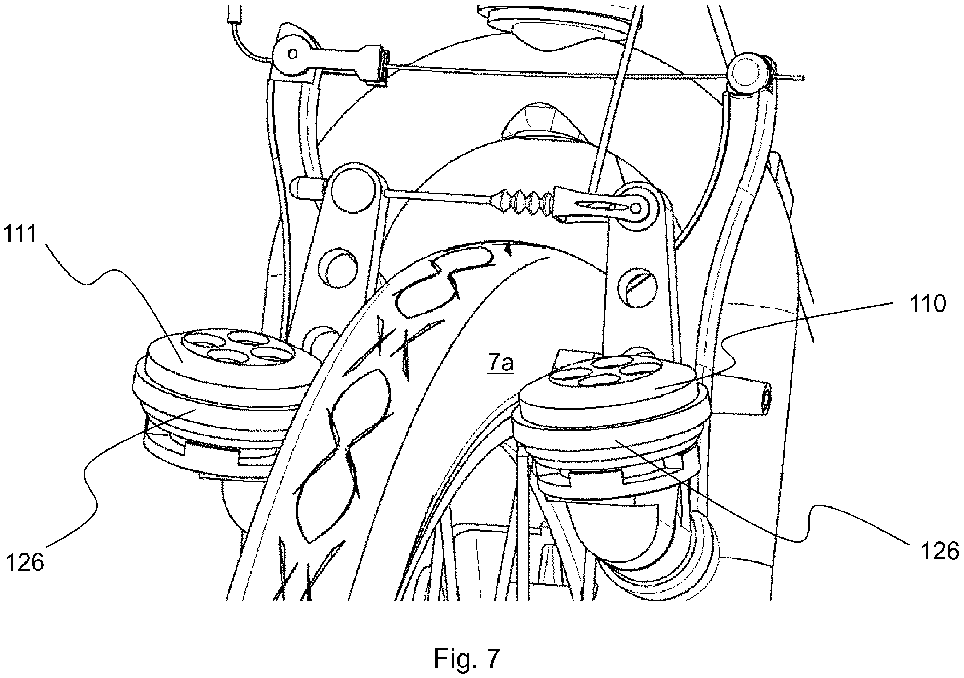

In this case, therefore, when the user commands, by means of the knobs 122, 123 on the handlebar 10, the rotors 110-113 to abut against the respective wheel 7, 8 in the contact condition already described (Fig. 7), the rotation of the wheels 7, 8 will cause the rotor 110-113 to rotate as well, so that the permanent magnets of the latter will induce current in the windings of the respective brushless generators 110a-113a.

The current will then circulate in the electronic regulators 132, 133 and will be sent to the batteries 104; in this context, the control assembly 130 processes the voltage and current values as a function of the rotation conditions of the rotors 110-113, i.e. the number of revolutions and/or the transmitted torque, so that the electronic regulators 132, 133 will be able to supply electric energy to the batteries in the conditions (voltage and/or current) required for recharging them.

It can be easily understood from the above description how the bicycle 1 with the motor-brake device 100 can solve the technical problem addressed by the invention.

In fact, as far as pedal assistance is concerned, the rotors 110-113 (with the respective brushless motors) exert a dragging action on the wheels 7, 8 of the bicycle, which action lightens the effort made by the pedalling person.

It must be pointed out that this result is attained by applying a force peripherally relative to the wheel 7, 8, in particular onto the rim 7a, 8a and/or onto the adjoining tyre, so that different advantageous effects can be obtained from this feature.

The first one is the smaller dimensions of the motor means employed, i.e. the rotors 110-113 with the respective brushless motors 110a-113a, all conditions being equal (transmitted torque and/or energy supplied by the batteries), compared to the pedal assistance systems known in the art, wherein the motor means operate at the crankset or the rear wheel hub of the bicycles.

In fact, it can be easily understood that the peripheral arrangement of the rotors 110-113 near the rim and/or the tyre allows obtaining, with a relatively small force applied by them, which is related to the revolutions of the rotors themselves and also to the friction with the wheels 7, 8, a torque that is effective in assisting the riding of the bicycle.

It is in fact known from the laws of physics that the resulting torque is proportional to the distance of the point of application of the force from the axis of rotation of the wheel (C= F x R, where C is the torque, F is the force, and R is the distance, which in this case coincides with the radius of the wheel).

As a logical corollary of this improved efficiency, also the consumption of the electric energy of the batteries 104 is proportionally reduced, all conditions being equal: it is apparent that the smaller the force to be applied, the less electric current will have to be supplied to the motors 110a-113a in order to obtain it.

This consumption reduction makes it possible to reduce the capacity of the batteries, which are therefore lighter; this is not a negligible factor, since reducing any superfluous weight is a commonly felt need in the bicycle world.

Furthermore, the peripheral arrangement of the motor means, i.e. the rotors 110-113 and the brushless motors 110a-113a, requires no structural modifications to the bicycle, nor to its wheels 7, 8 or its crankset 13, unlike known bicycles.

As previously mentioned, the pedal assistance systems known in the art employ motors installed at the crankset or at the rear wheel hub; this requires that such components be specially designed for housing the (electric) motors operating at the axis of rotation of the pedals or of the wheel.

The short distance from the axis of rotation implies that the known motors must be relatively big to be able to output sufficient torque.

On the contrary, the present invention can be implemented without requiring any modification to the structure of the various parts of the bicycle, so that it is also applicable to existing bicycles (i.e. retrofitting), with clear advantages in terms of costs and diffusion. Moreover, the drive-brake device 100 according to the invention can operate both as a brake and as an electric generator for recharging the batteries 104: *de facto,* this considerably increases the efficiency of the invention, which can in practice be used not only for pedal assistance, i.e. when riding uphill, but also when riding downhill or anyway whenever the user wants to.

To the Applicant's knowledge, this result is not known in the prior art, wherein the motor means for pedal assistance are, de facto, a dead weight that needs to be transported for much of the bicycle riding time.

Of course, the invention may be subject to variations with respect to the above description.

As aforesaid, changes may be made as a function of the different bicycles to which the invention is to be applied (road or off-road, for adults or children, etc.); it follows that the handlebar-mounted controls, which in the illustrated example are knobs 122, 123 as commonly used on bicycles, may be configured otherwise, e.g. as push-buttons or levers, or may even be absent.

Let us consider, for example, the case wherein the rotors 110-113 can be moved into the working conditions manually by a user, similarly to the dynamos that were employed on bicycles a few decades ago.

In such cases, a support for the rotors (with the respective brushless motors) of the oscillating-lever type will be used, with the addition of a retainer for at least the working condition of contact with the bicycle wheel.

Different solutions may be conceived also as concerns the components of the control unit 101, such as the control assembly 130 and the electronic regulators 132, 133, while taking into account that these are electronic apparatuses that can be incorporated into circuits of various nature (e.g. processors, PCBs, boards, firmware, etc.).

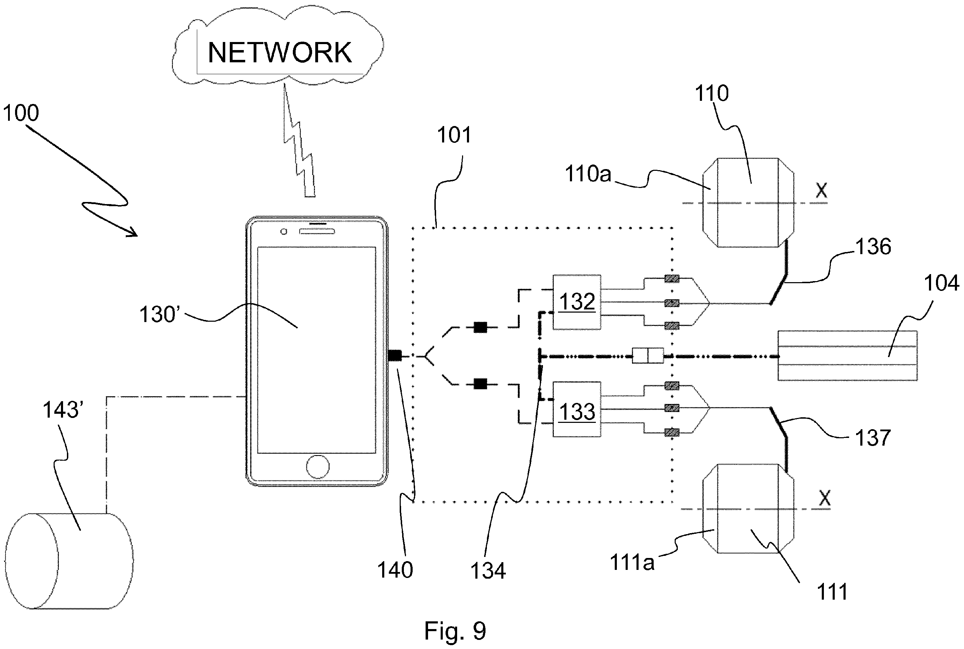

In this respect, a particularly interesting variant is shown in Figure 9, which provides a block diagram similar to the one already considered, the main difference being that the control unit 101, or at least a part thereof, is allocated into a mobile telecommunications terminal, such as a cellular or satellite phone, a tablet or a satellite navigation system, or the like.

As can be seen, in this case the control assembly 130 of the previous example is replaced with the mobile terminal 130', which performs the functions thereof, as already described, and also other functions made possible by a mobile terminal, which is preferably a mobile phone of the latest generation, commonly referred to as smartphone.

In fact, thanks to the geographic location functions of the terminal 130' and its connection to the telecommunications network (schematically represented in Figure 9), it is possible to detect in real time the position of the bicycle 1 and the road it is riding on, thus knowing if ascents or descents will be encountered along the road and when they will be encountered while riding at a given pace.

For these and other functions, it is possible to create specific applications for mobile terminals, i.e. programs that can be easily started by a user (e.g. by touching an icon on the touchscreen of the mobile terminal).

Furthermore, the mobile terminal 130' can compute the speed of the bicycle by detecting its geographic position over time; this can be done in accordance with the method used by satellite navigation systems, if the mobile terminal 130' is suitable for this purpose, or by locating the device through the cellular telephone network.

At any rate, if the terminal 130' can detect the speed of the bicycle, the latter does not need to be equipped with speedometer means or other sensors performing this function (e.g. the pulse generator 143 or the like).

Further possible variants of the invention to be taken into account are aimed at improving the performance of the bicycle by integrating the drive-brake device 100 with additional functions, such as the following.

The first one is to add a force or pressure sensor on the control knobs or grips 122, 123 of the drive-brake device 100, or on the handlebar-mounted levers 20, 21 of the brakes 18, 19; the force or pressure sensor, which may be of any known type, e.g. a piezoelectric quartz, allows detecting the braking force being applied, and hence controlling the operation of the rotors 110-113 by modulating their regenerative braking action (i.e. when they are operating as electric generators), much like an automotive ABS braking system. A second variant requires the use of an ultracapacitor or supercapacitor in the control unit 101: in practice, one of such supercapacitors is added and connected to the control assembly 130 (visible in the diagrams of Figs. 8 and 9) in parallel to the batteries, so that the peak currents generated by the rotors 110-113 will be absorbed by such circuit components and transferred to the batteries, thus increasing the charging efficiency of the drive-brake device 100 for pedal assistance.

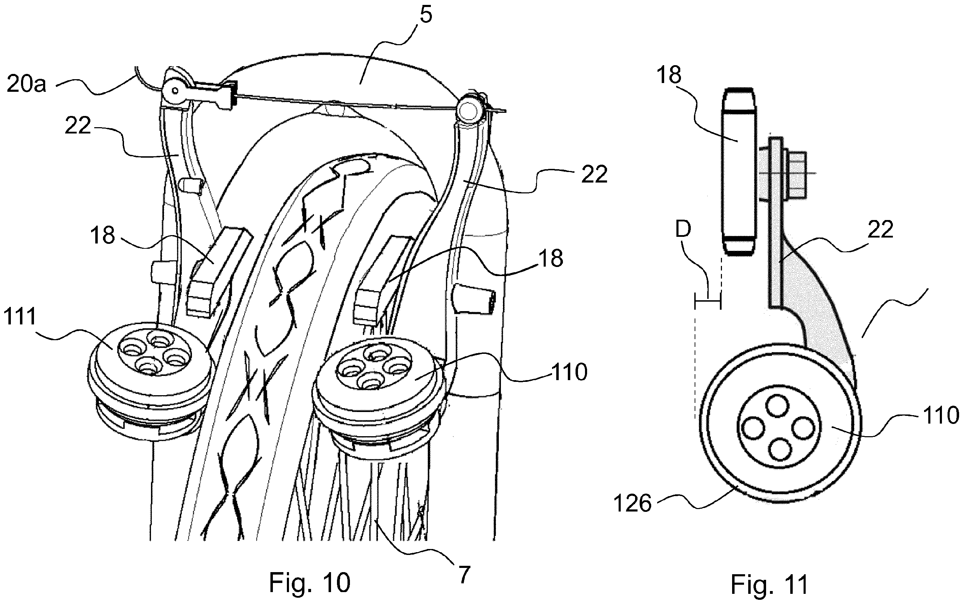

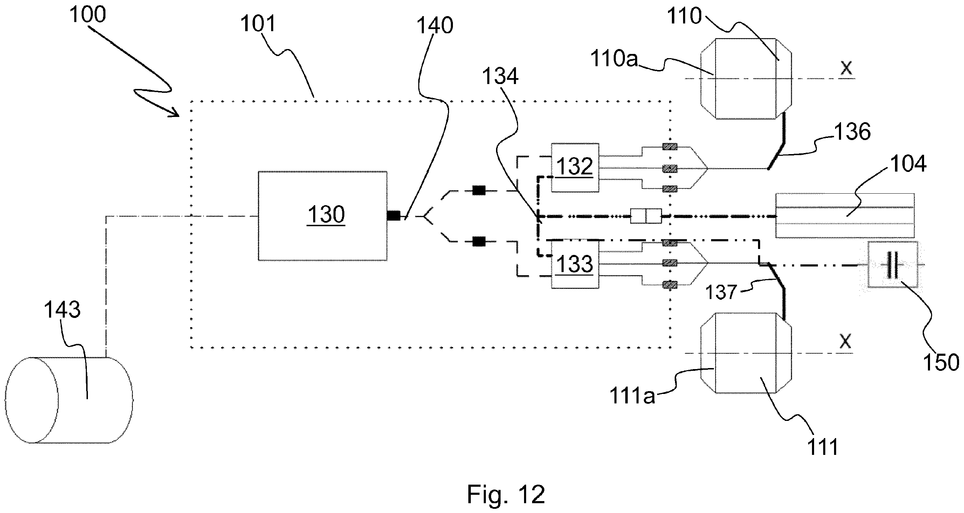

This solution is also advantageously applicable to a further variant of the invention, shown in Figures 10, 11 and 12, which respectively illustrate a different support configuration of the motors 110a-113a and the rotors 110-113 and a diagram of the control unit 101 equipped with supercapacitors, although the latter may nevertheless also be applied to the solutions previously described with reference to Figs. 8, 9 and 10.

In these figures, for simplicity, elements which are structurally of functionally similar to those already described are designated by the same numerals; therefore, the following will only highlight the main differences between this variant and the previous embodiments.

In this case, the drive-brake device 100 is mounted on the same arms 22, 23 of the brakes 18, 19, thus simplifying the structure of the bicycle, since the device can be actuated by simply operating the brake levers 20, 21; it follows that the knobs 122, 123 are no longer necessary.

In particular, the configuration of the oscillating arms 22, 23 and/or the arrangement of the brakes 18, 19 and of the rotors 110-113 are such that, when a cyclist operates the levers 20, 21, the rotors 110-113 will come in contact with the respective wheel 7, 8 earlier than the brakes 18, 19.

For this purpose, the rotors 110-113 are arranged on respective oscillating support arms 22, 23 in an offset position relative to the brakes 18, 19, i.e. protruding past the brakes by a distance D as shown in Figure 11, which is a plan view of one of the front brakes 18 and the respective support arm 22.

Thus, when the cyclist operates the lever 20 on the handlebar of the bicycle, the force exerted via the cable 20a will cause the front support arms 22 to oscillate (but the same also applies, of course, to the rear ones 23 when the corresponding handlebar-mounted lever 21 is operated), thereby bringing the rotors 110, 111 into contact with the front wheel 7.

By operating the handlebar-mounted lever 20, the cyclist can brake progressively as necessary, beginning with a lighter slowing action and then continuing with a stronger action for stopping the bicycle.

For this purpose, the braking effect of the front rotors 110, 111 (or rear rotors 112, 113) when they are operating as generators is first used; in this condition, the cyclist actuates the handlebar-mounted lever 20 for a first part of its travel, thereby bringing the rotors 110, 111 into contact with the wheel while the pads 18 are still at a distance from it. This is because the above-mentioned offset D between them allows the motor-brake device 100 to take different operating conditions, depending on how the cyclist actuates the handlebar-mounted lever 20.

In a first operating condition resulting from the first part of the travel of the lever 20, the motors 110a, 111a associated with the rotors 110, 111 generate electric current as previously explained, and the system allows recharging the batteries 104.

This condition typically occurs when riding over a mild downhill slope, when the bicycle can be made to slow down without having to brake hard, or also when pedalling on a flat road; for this purpose, the lever 20 and/or 21 on the handlebar is preferably provided, or anyway associated, with a retainer that allows it to be fixedly held in the condition in which the rotors 110-113 are in contact with the wheels 7, 8. This will prevent the cyclist from having to continuously pull the lever 20, 21, if he/she wants to cover a long stretch in order to recharge the battery 104 and/or the supercapacitor 150; of course, the retainer can be released to restore the normal operation of the lever 20, 21.

When a stronger braking action is required, e.g. in order to stop the bicycle abruptly or anyway rapidly, the cyclist will pull the handlebar-mounted lever 20 through the second part of its travel or all the way, so that the force exerted by the cable 20a on the oscillating support arms 22 will also bring the brakes 18 into contact with the wheel 7, and the braking action thus obtained will be the sum of that of the generators 110a, 111a and that of the brakes 18.

It is worth pointing out that the offset D between the brake 18 and the rotor 110, which is preferably comprised between a few millimetres and one centimetre or slightly more, is such as to allow the brakes 18 to come in contact with the wheel 7 while exploiting the elasticity and/or flexibility of the rotors 110, 111, of their peripheral rubber layer 126, of the oscillating arms 22 and of the brakes 18.

For this purpose, one or more of these components may be adjustably mounted, e.g. by means of screws, spacers, etc., so that their operation and braking action can be optimally adapted to the bicycle.

In this implementation solution (but also in the previous one), a braking action is obtained which can be defined as "regenerative", i.e. suitable for generating electric energy that can be stored into the batteries or even into a supercapacitor 150, i.e. an electrotechnical component of high electric capacity (a few thousand Farad), capable of storing a large amount of electric charge generated by the motors-generators 110a-113a.

For further information about such components, reference can be made to the broad technical and scientific literature on this matter. For a brief review, see also the Internet site: https://en.wikipedia.org/wiki/Supercapacitor.

In accordance with this embodiment of the invention, the regenerative energy supplied by the generators 11a-113a is stored into both the supercapacitor 150 and the batteries 104; this is because the supercapacitor can release such energy quickly in case of instantaneous and sudden power requests, e.g. restarts, jumps or the like.

In other words, by appropriately programming the software of the control unit 101 and/or of the control assembly 130 of the device 100, it is possible to see that the power required for pedal assistance is split between the supercapacitor 150 and the batteries 104, so as to optimize the utilization of the available energy.

In fact, it is necessary to take into account that the efficiency of the motors-generators 110a-113a, both when operating as motors and when operating as generators, is approximately 50%: this means that there are still high intrinsic losses in the system, and it is therefore important to exploit the available energy at best.

In conclusion, it can be stated that the bicycle 1 with the motor-brake device 100 of the invention is a vehicle that comprises a number of innovative and advantageous features, such as:
- capability of operating as a normal bicycle, with no friction against the pedal assistance system, due to the fact that the motors-generators 110a-113a and their rotors 110-113 are detached from any component (pedals, chain, hub, pinions, etc.) for normal pedalling;
- capability of electric drive for pedal assistance and electric generation for braking assistance, thus offering a pleasant riding experience as well as efficient and progressive braking, both electronically (similar to the automotive ABS braking system) and mechanically, since normal brakes are used, like those employed on normal bicycles;
- optimization of electric consumption and generation, thanks to the possibility of splitting the electric charge between the batteries 104 and the supercapacitors 150, so that it will be available in the appropriate manner when needed, depending on the circumstances and requirements;
- the system can be implemented by using electronic, mechanic and informatics-related components (supercapacitors, batteries, brushless motors, software, processors, brakes, etc.) that may also be of a type commercially available, i.e. accessible at low costs.

As previously explained and illustrated in the drawings, all these components are applicable to normal bicycles, in that they do not require any particular modifications to the frame, the pedals, the wheels or other parts of the bicycle.

Furthermore, they are relatively light components, being at any rate less heavy that the pedal assistance systems currently available on the market or made in accordance with the above-mentioned prior art.

Finally, the rotors 110-113 and the motors 110a-113a can be associated with gears or mechanical reducing mechanisms (axial or epicyclical reducers) to improve the braking and pedal assistance performance.

All these and other variants will still fall within the scope of the following claims.

## Claims

1. Bicycle comprising drive means (100, 110-113) for pedal assistance, **characterized in that** said means (100, 110-113, 110a-113a) are active at substantially peripheral points of at least one wheel (7, 8) of the bicycle.

2. Bicycle according to claim 1, wherein the drive means (100, 101, 110-113, 110a-113a) are active upon the rim (7a, 8a) and/or the tyre of the wheel (7, 8).

3. Bicycle according to claims 1 or 2, wherein the drive means (100, 101, 110-113, 110a-113a) are adapted to exert a braking action on the wheel (7, 8) when the bicycle is riding downhill or anyway when no pedal assistance is required.

4. Bicycle according to any one of the preceding claims, wherein the drive means comprise at least one rotor (110-113) of an electric motor (1 10a-113a) of the brushless, direct-current, type.

5. Bicycle according to claim 4, wherein said at least one rotor (110-113) is external to the respective electric motor (110a-113a) and is arranged in such a way, with respect to the wheel (7, 8), that its peripheral speed is substantially parallel to the peripheral speed of the point of the wheel (7, 8) with whom it is in contact.

6. Bicycle according to claims 4 or 5, wherein the rotors (110-113) are movable between a working position, in which they are peripherally in contact with the wheel (7, 8), and an idle position, in which they are at a distance from the wheel (7, 8).

7. Bicycle according to claim 6, wherein the rotors (110-113) with the respective electric motors (110a-113a) are arranged on supports (22, 23, 116-119) or similar elements oscillating between said working and idle positions.

8. Bicycle according to any one of the preceding claims, wherein at least a part of the drive means (110-113, 110a-113a) are arranged on supports (22, 23, 116-119) or similar elements oscillating between a working position, in which said drive means (110-113, 110a-113a) are peripherally in contact with the wheel (7, 8), and an idle position, in which they are at a distance from the wheel (7, 8), wherein said supports (22, 23, 116-119) also support the respective brakes (18, 19) of the bicycle.

9. Bicycle according to claim 8, wherein the drive means (110-113, 110a-113a) are mounted on the oscillating supports (22, 23, 116-119) in an offset position relative to the brakes (18-19), so as to come in contact with the wheel (7, 8) earlier than the brakes (18-19) when they are in the working condition.

10. Bicycle according to any one of the preceding claims, wherein at least a part of the drive means (110-113, 110a-113a) are arranged on supports (22, 23, 116-119) or similar elements oscillating between a working position, in which said drive means (110-113, 110a-113a) are peripherally in contact with the wheel (7, 8), and an idle position, in which they are at a distance from the wheel (7, 8), comprising retaining means for holding said supports (22, 23, 116-119) in said working condition.

11. Bicycle according to any one of claims 8 to 10, comprising retaining means for holding said supports (22, 23, 116-119) in the working condition, in which the brakes (18, 19) are not in contact with the wheel (7, 8).

12. Bicycle according to any one of the preceding claim, comprising control elements (20, 21, 122, 123), such as knobs, levers or the like, arranged on the handlebar (10) for controlling the shifting of the drive means (110-113) and/or of the respective oscillating supports (22, 23, 116-119) between said working and idle positions.

13. Bicycle according to any one of the preceding claims, wherein the drive means (100, 101,110-113) comprise an electronic control unit (101), wherein a control assembly (130) is adapted to process information about the pedalling action and/or the bicycle speed, in order to adjust the speed of the rotors (110-113).

14. Bicycle according to claim 13, wherein the drive means (100, 101, 110-113, 110a-113a) comprise an electronic regulator (132-134) operationally connected to a respective electric motor (110a-113a) of a rotor (110-113), to the control assembly (130) and to a battery (104), for regulating the electric current supplied to, or generated by, the electric motor (110a-113a).

15. Bicycle according to claims 13 or 14, wherein the functions of the control unit (101) are at least partly carried out by a mobile terminal (130') for telecommunications.

16. Bicycle according to any one of the preceding claims, comprising a force and/or pressure sensor adapted to sense the braking force being applied to the bicycle, so as to control the operation of the drive means (100, 101, 110-113, 110a-113a) in such a way as to provide a modulated braking action essentially similar to the one provided by automotive ABS braking systems.

17. Bicycle according to any one of the preceding claims, wherein the drive means (100, 101, 110-113, 110a-113a) comprise an electric battery (104) and at least one circuit component of the supercapacitor or ultracapacitor type (150), or the like, operationally connected to an electronic control unit (101), so that the electric currents generated by, or supplied to, the drive means (100, 101, 110-113, 110a-113a) are split between said supercapacitor (150) and the battery (104).
